Europäisches Patentamt

European Patent Office

Office européen des brevets

(19)

(11) Veröffentlichungsnummer: **0 243 296**
**B1**

(12)    **EUROPÄISCHE PATENTSCHRIFT**

(45) Veröffentlichungstag der Patentschrift: **27.12.90**

(21) Anmeldenummer: **87730030.1**

(22) Anmeldetag: **21.03.87**

(51) Int. Cl.⁵: **H 04 Q 1/14**

(54) **Verteilereinrichtung, insbesondere für den Hauptverteiler von Fernsprechanlagen.**

(30) Priorität: **23.04.86 DE 3614063**

(43) Veröffentlichungstag der Anmeldung:
**28.10.87 Patentblatt 87/44**

(45) Bekanntmachung des Hinweises auf die
Patenterteilung:
**27.12.90 Patentblatt 90/52**

(84) Benannte Vertragsstaaten:
**AT BE CH DE ES FR GB GR IT LI LU NL SE**

(56) Entgegenhaltungen:
**DE-A-2 433 314**
**DE-B-1 118 265**
**LU-A- 65 591**

(73) Patentinhaber: **KRONE Aktiengesellschaft**
**Beeskowdamm 3-11**
**D-1000 Berlin 37 (DE)**

(72) Erfinder: **Hegner, Gunter**
**Möranenweg 22**
**D-1000 Berlin 27 (DE)**

Courier Press, Leamington Spa, England.

EP 0 243 296 B1

## Beschreibung

Die Erfindung bezieht sich auf eine Verteilereinrichtung, insbesondere für den Hauptvertiler von Fernsprechanlagen, aus mit Kontaktelementen und Trennstellen für Schaltstecker versehenen Anschlußmodulen mit Anschaltefeldern für die Teilnehmer- und Vermittlungskabel.

Derartige Verteilereinrichtungen, insbesondere für den Hauptverteiler von Fernsprechanlagen, dienen als Schnittstelle für die Teilnehmer- und Vermittlungsseite in Vermittlungsstellen von Fernsprechanlagen. Die bekannten Verteilereinrichtungen umfassen auf der einen Seite eines Gestells angeordnete Anschlußmodule mit Anschaltefeldern zum Anschluß der Teilnehmerkabel und auf der anderen Seite des Gestells angeordnete Anschlußmodule mit Anschaltefeldern für die Vermittlungskabel. Die Anschaltefelder jeweils zweier zusammengehöriger Anschlußmodule für die Teilnehmer- und Vermittlungskabel sind miteinander durch Rangierdrähte verbunden. Dabei dienen die Trennstellen der Anschlußmodule für die Teilnehmerkabel zum Einstecken von Schaltsteckern zum Prüfen und Messen der Teilnehmerkabel sowie zum Einsetzen von Überspannungsableitern. Die Trennstellen der Anschlußmodule für die Vermittlungskabel dienen zum Einstecken von Schaltsteckern zum Prüfen der Vermittlungskabel und zum Anschalten weiterer Betriebseinrichtungen.

Somit sind bei den bekannten Verteilereinrichtungen auf der einen Seite des Gestells das Zähl- und Ordnungssystem des Teilnehmerleitungsnetzes und auf der anderen Seite des Gestells das Zähl- und Ordnungssystem des Vermittlungskabelnetzes bzw. Vermittlungseinrichtungen an jeweils unterschiedlichen, mit den notwendigen Anschaltefeldern versehenen Anschlußmodulen abgeschlossen. Die Zuordnung und das Durchschalten der zueinander gehörenden Anschlußkontakte beider Seiten erfolgen mittels der Rangierdrähte. Außerdem werden durch diese Verteilereinrichtungen noch weitere Funktionen erfüllt, wie zum Beispiel Messen, Prüfen, Trennen, Schalten und Sichern der Leitungswege gegen Überspannung und Überstrom, wozu jeweils angepaßte Schaltstecker in die jeweiligen Anschlußmodule einsetzt werden.

Nachteilig bei diesen bekannten Verteilereinrichtungen sind die aufwendige Bauweise mit großem Raumbedarf für das Gestell mit beidseitig angeordneten Anschlußmodulen und mit dazwischen geführten Rangierdrähten, die große Anzahl notwendiger Anschlußmodule sowie der große technische Aufwand bei der Erstinstallation, da zwischen die Anschlußfelder jeweils zweier zugeordneter Anschlußmodule die Rangierdrähte eingeschaltet werden müssen.

Aus der LU—A—65 591 ist eine Verteilereinrichtung der gattungsgemäßen Art mit die Trennstelle bildenden Kontaktzungen vorbekannt, in welche sowohl von der vorderen Anschlußseite als auch von der rückwärtigen Manipulierseite her jeweils Stecker einführbar sind. Nachteilig hierbei ist, daß jeweils nur ein Stecker entweder von der vorderen Anschlußseite oder von der rückwärtigen Manipulierseite her in die Trennstelle eingesteckt werden kann, so daß ein weiteres Beschalten der Trennstelle bei von der vorderen Anschlußseite her eingestecktem Stecker von der rückwärtigen Manipulierseite her nicht möglich ist.

Der Erfindung liegt von daher die Aufgabe zugrunde, eine Verteilereinrichtung der gattungsgemäßen Art so auszubilden, daß die Trennstelle sowohl von der vorderen Anschalteseite als auch von der rückwärtigen Manipulierseite her gleichzeitig mit Schaltsteckern bestückbar ist, welche auch von der rückwärtigen Manipulierseite her ein Auftrennen der Trennstelle ermöglichen, wobei mehrere Betriebsdienste, wie a.B. Rangieren, Umschalten, Prüfen, Messen und Sichern gleichzeitig möglich sind.

Die Lösung dieser Aufgabe ergibt sich aus den kennzeichnenden Merkmalen des Anspruches 1. Durch die besondere Ausbildung der von der rückwärtigen Manipulierseite her einsteckbaren Stecker mit Schaltzungen zum Auftrennen der Trennstelle wird ermöglicht, daß die Schaltzungen auch im in die Trennstelle eingesteckten Zustand einen weiteren Stecker von der vorderen Anschlußseite her aufnehmen können, der mit seinen Steckzungen in die Einsecköffnung auf der vorderen Anschlußseite eingesteckt ist. Dabei trennt der von der rückwärtigen Manipulierseite her in die Trennstelle durch die rückwärtige Einstecköffnung eingesteckte Stecker mit seinen beiden Schaltzungen die Trennstelle derart auf, daß der von der vorderen Anschlußseite her einsteckbare Stecker mit seinen Schaltzungen in die Schaltzungen des anderen Steckers einsteckbar ist. Auf diese Weise bleiben alle Betriebsdienste, wie z.B. Rangieren, Umschalten, Prüfen, Messen und insbesondere Sichern, gleichzeitig möglich, selbst wenn die Trennstelle von der rückwärtigen Manipulierseite her durch einen Stecker aufgetrennt ist und von der vorderen Anschalteseite her ein weiterer Stecker mit seinen Schaltzungen in die Trennstelle eingesteckt ist, nämlich in die dann dort befindlichen beiden Schaltzungen des von der rückwärtigen Manipulierseite her eingesteckten Steckers. Somit ist die Trennstelle sowohl von der vorderen Anschalteseite als auch von der rückwärtigen Manipulierseite her mit Steckern bestückbar, welche auch von der rückwärtigen Manipulierseite her ein Auftrennen der Trennstelle ermöglichen.

Bei der Erstinstallation ist die Montage der Verteilereinrichtung mit den erfindungsgemäßen Anschlußmodulen in einfacher und wirtschaftlicher Weise ohne große Vorleistungen für eventuell später anfallende Aufgaben möglich. Sofern während der späteren Benutzung der Verteilereinrichtung weitere Anforderungen notwendig werden, können diese leicht durch das Einsetzen der notwendigen Schaltstecker von der Anschalte- und/oder Manipulierseite her in die Trennstelle der Anschlußmodule erfüllt werden. Die besonderen Vorteile der mit den erfindungs-

gemäßen Anschlußmodulen versehenen Vertei-
lereinrichtung bestehen im einfachen und kompakten Aufbau, in der Verwendung nur noch
eines einzigen Anschaltefeldes, in einem geringeren technischen Aufwand bei der Erstinstallation,
wobei jedoch alle Betriebsdienste, wie zum Beispiel Rangieren, Umschalten, Prüfen, Messen und
Sichern möglich sind, sowie schließlich in der
Möglichkeit des Einsatzes weiterer technischer
Betriebseinrichtungen erst zu einem späteren
Zeitpunkt. Insbesondere ist das Anschalten von
Rangierdrähten bei der Erstinstallation der Verteilereinrichtung nicht mehr notwendig.

Weitere vorteilhafte Ausgestaltungen der Erfindung ergeben sich aus den Unteransprüchen.

Die Erfindung ist nachfolgend anhand eines in
den Zeichnungen näher dargestellten Ausfüh-
rungsbeispieles einer Verteilereinrichtung, insbe-
sondere für den Hauptverteiler von Fernsprechanlagen, näher erläutert. Es zeigen:

Fig. 1 eine perspektivische, teilweise geschnittene Prinzipdarstellung einer Verteilereinrichtung
mit zwei Reihen von Anschlußmodulen, mit
einem auf der Anschalteseite der einen Reihe
eingesteckten Schaltstecker und mit auf der Manipulierseite der anderen Reihe eingesteckten
Schaltsteckern.

Fig. 2 einen vertikalen Querschnitt hierdurch in
einer Prinzipdarstellung,

Fig. 3 die Anschalteseite einer komplett
bestückten, einen Hauptverteiler von Fernsprechanlagen bildenden Verteilereinrichtung,

Fig. 4 einen vereinfachten Vertikalschnitt
gemäß der Linie IV—IV in Fig. 3,

Fig. 5 einen Horizontalschnitt gemäß der Linie
V—V in Fig. 3,

Fig. 6 die Manipulierseite der Verteilereinrichtung gemäß Fig. 3 und

Fig. 7 bis Fig. 12 Schaltschemata verschiedener
Ausführungsformen von in die Manipulierseite
der Anschlußmodule einsteckbaren Schaltstekkern.

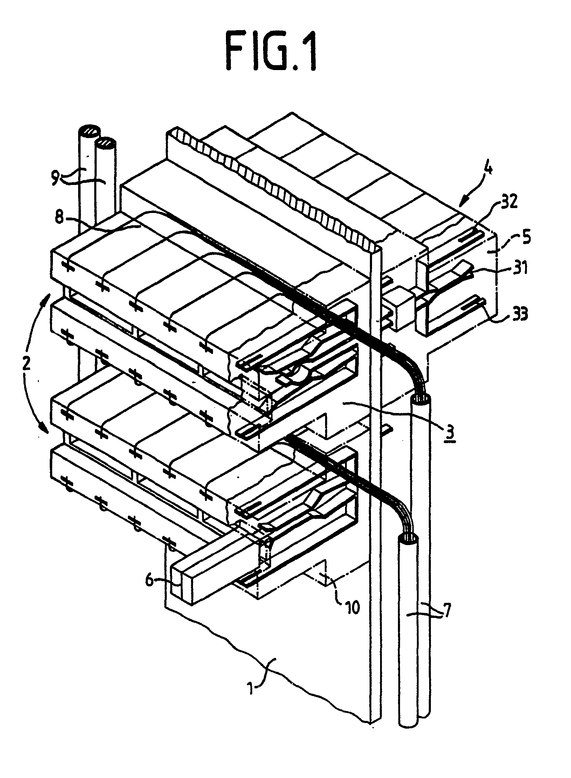

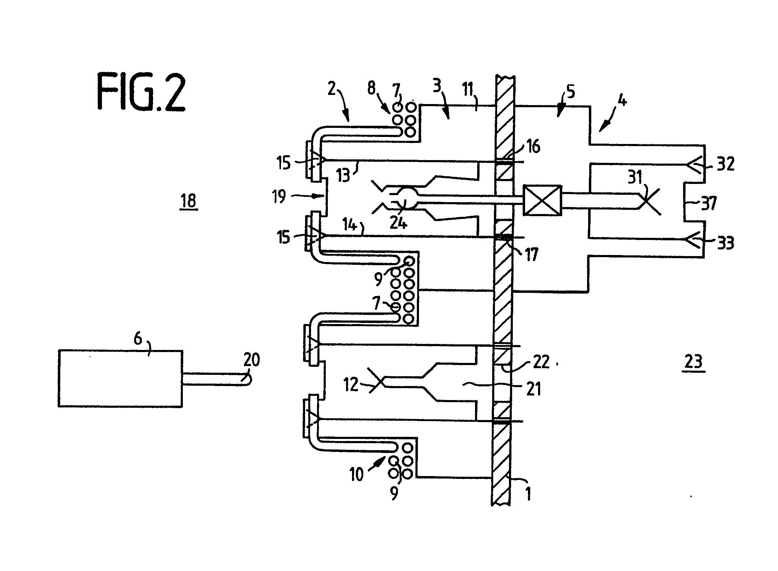

Die in Fig. 1 und 2 vereinfacht dargestellte
Verteilereinrichtung umfaßt ein als Platte vereinfacht dargestelltes Gestell 1 mit zwei, auf der
Anschalteseite 18 angebrachten Reihen 2 von
Anschlußmodulen 3 sowie mit einer, auf der
Manipulierseite 23 des Gestells 1 angebrachten
Reihe 4 von in die Anschlußmodule 3 eingesteckten Schaltsteckern 5. Ein weiterer Schaltstecker 6
ist von der Anschalteseite 18 in ein Anschlußmodul 3 eingesteckt. Von unten her sind Teilnehmerkabel 7 zu jeder Reihe 2 von Anschlußmodulen 3
zugeführt. Die Teilnehmerkabel 7 sind auf der
Oberseite der Anschlußmodule 3 in Führungen 8
geführt. Von oben her werden jeder Reihe 2 von
Anschlußmodulen 3 Vermittlungskabel 9 zugeführt. Diese sind auf der Unterseite einer jeden
Reihe 2 von Anschlußmodulen 3 in Führungen 10
geführt.

Jedes Anschlußmodul 3 besteht aus einem
Kunststoffkörper 11 mit darin gehaltenen, eine
Trennstelle 12 ausbildenden Kontaktelementen
13, 14. Die Kontaktelemente 13 sind über nicht
näher dargestellte Schneid- / Klemmverbindungen 15 mit den einzelnen Teilnehmerkabeln 17
verbunden. Die Kontaktelemente 14 sind über
entsprechende Schneid- / Klemm-Verbindungen
15 mit den einzelnen Vermittlungskabeln 9 verbunden. Jeder Kunststoffkörper 11 ist mit Halteelementen 16 zur Befestigung am Gestell 1 ausgebildet. Die Halteelemente 16 sind als die Kontaktelemente 13, 14 zur Rückseite hin verlängernde
Steckzungen ausgebildet, welche in Steckschlitze
17 innerhalb des gestelles 1 isoliert und klemmend bzw. schnappend eingesteckt sind. Die
Teilnehmer- und Vermittlungskabel 7 bzw. 9 sind
von der Anschalteseite 18 des gestells 1 hier
mittels nicht näher dargestellter Anlegewerkzeuge in die Schneid- / Klemm-Verbindungen 15
der Kontaktelemente 13 bzw. 14 einklemmbar.
Zwischen den Schneid- / Klemm-Verbindungen
15 weist der Kunststoffkörper 11 eine Einstecköffnung 19 zum Einstecken der Schaltzungen 20 von
Schaltsteckern 6 von der Anschalteseite 18 her in
die Trennstelle 12 auf, wie es in den Figuren 1 und
2 dargestellt ist. Derartige bekannte Schaltstekker 6 dienen zum Auftrennen oder Unterbrechen
des Leitungsweges zwischen den über die Kontaktelemente 13, 14 angeschalteten Teilnehmer- und
Vermittlungskabel 7 bzw. 9.

Der Kunststoffkörper 11 eines jeden Anschlußmoduls 3 weist auf seiner rückwärtigen Manipulierseite 23 zwischen den dort angebrachten Hal-
teelementen 16 eine weitere Einsecköffnung 21
auf, welcher im Gestell 1 eine Durchstecköffnung
22 zugeordnet ist. Durch die Öffnungen 21, 22
hindurch können von der Manipulierseite 23 des
Gestells 1 her die Schaltzungen 24 weiterer
Schaltstecker 5 zum Auftrennen der Trennstellen
12 der jeweiligen Anschlußmodule 3 eingesteckt
werden. Diese Schaltzungen 24 greifen weit in
den Kunststoffkörper 11 des jeweiligen Anschlußmoduls 3 herein, wie es in Fig. 2 im Prinzip
dargestellt ist. Die Schaltzungen 24 der Schaltstecker 5 sind derart ausgebildet, daß diese im in
eine Trennstelle 12 eingesteckten Zustand weitere
Schaltstecker 6 aufnehmen können, die von der
Vorderseite 18 her mit den Schaltzungen 20 in die
Einstecköffnung 19 des jeweiligen Anschlußmoduls 3 eingesteckt sind.

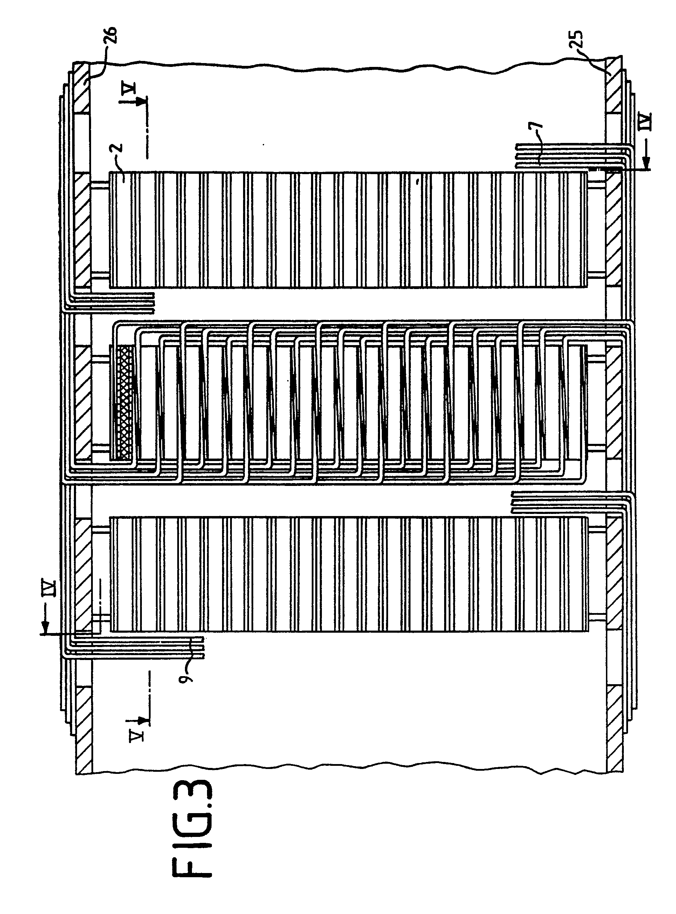

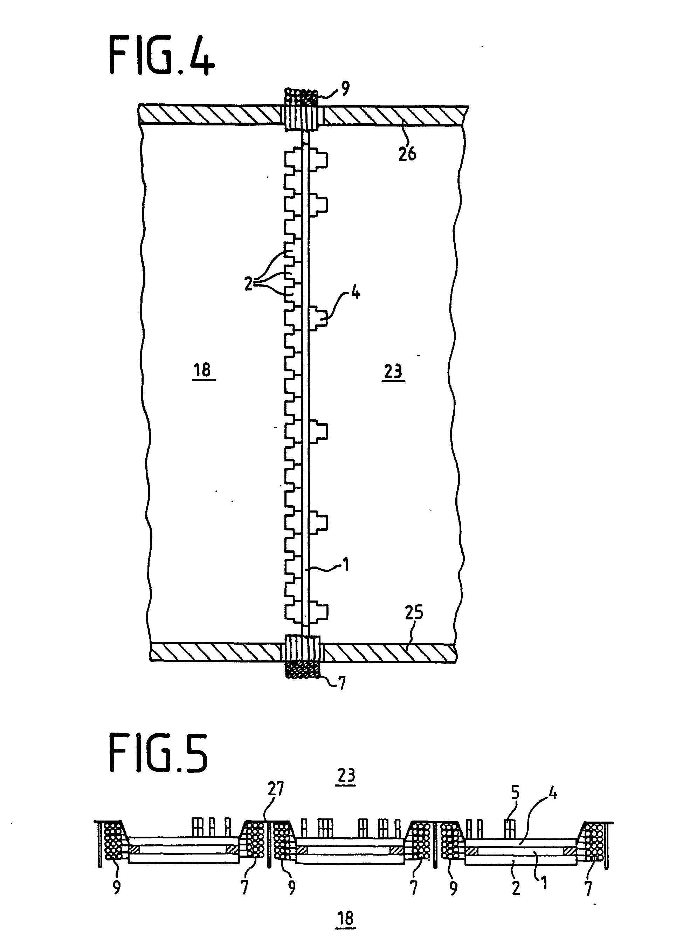

Die Figuren 3 bis 6 zeigen in einer konkreten
Ausführungsform drei auf der Anschalteseite 18
mit jeweils 21 Reihen 2 von Anschlußmodulen 3
versehene Gestelle 1, denen jeweils auf der rechten Seite von unten die Teilnehmerkabel 7 und
auf der linken Seite von oben die Vermittlungskabel 9 in Bündelform zugeführt werden. Die Fig. 4
zeigt einen entsprechenden Vertikalschnitt durch
ein solches Gestell 1 gemäß Fig. 3. Dabei sind auf
der Manipulierseite 23 des gestells 1 insgesamt
sechs Reihen 4 von Schaltsteckern 5 in die jeweils
auf der Anschalteseite 18 zugeordneten Reihen 2
von Anschlußmodulen 3 eingesteckt. Die Gestelle
1 erstrecken sich dabei zwischen dem Boden 25
und der Decke 26 eines entsprechenden, die
Verteilereinrichtung aufnehmenden Gebäuderaumes. Die Gestellreihen sind in vertikaler und
horizontaler Ebene beliebig erweiterbar.

In Fig. 5 ist ein entsprechender Horizontalschnitt durch die Verteilereinrichtung gemäß Fig. 3 gezeigt.

Beidseits eines jeden Gestelles 1 sind dabei die Teilnehmerkabel 7 und Vermittlungskabel 9 gezeigt, die in vertikaler Richtung in entsprechenden Kabelführungen 27 zusammengefaßt sind. Auf der Anschalteseite 18 befinden sich die Reihen 2 von Anschlußmodulen 3. Auf der Manipulierseite 23 befinden sich die Reihen 4 von Trennsteckern 5.

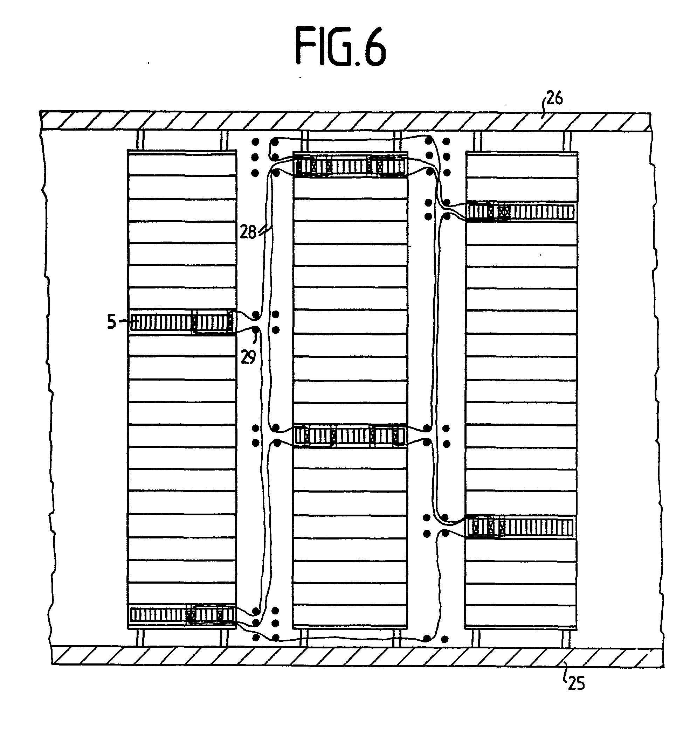

Die Fig. 6 zeigt die Manipulierseite 23 der Verteilereinrichtung gemäß Figur 3. Hier sind die Teilnehmer und Vermittlungskabel 7 bzw. 9 der Einfachheit halber fortgelassen worden. Es sind Rangierdrähte 28 dargestellt, welche einzelne Teilnehmer- und Vermittlungskabel 7, 9 untereinander variabel miteinander verbinden. Diese Umrangierungen erfolgen über die in auf der Anschalteseite 18 befindlichen Anschlußmodule 3 eingesteckten Schaltstecker 5. Diese Schaltstecker 5 sind in später noch näher beschriebener Weise ausgebildet. Auf diese Weise können die bei der Erstinstallation der Verteileinrichtung festgelegten Verbindungen zwischen einem Teilnehmerkabel 7 und einem Vermittlungskabel 9 rangiert werden. Für die Führung der Rangierdrähte 28 sind einzelne Aufhängungs- und Führungsstege 29 vorgesehen.

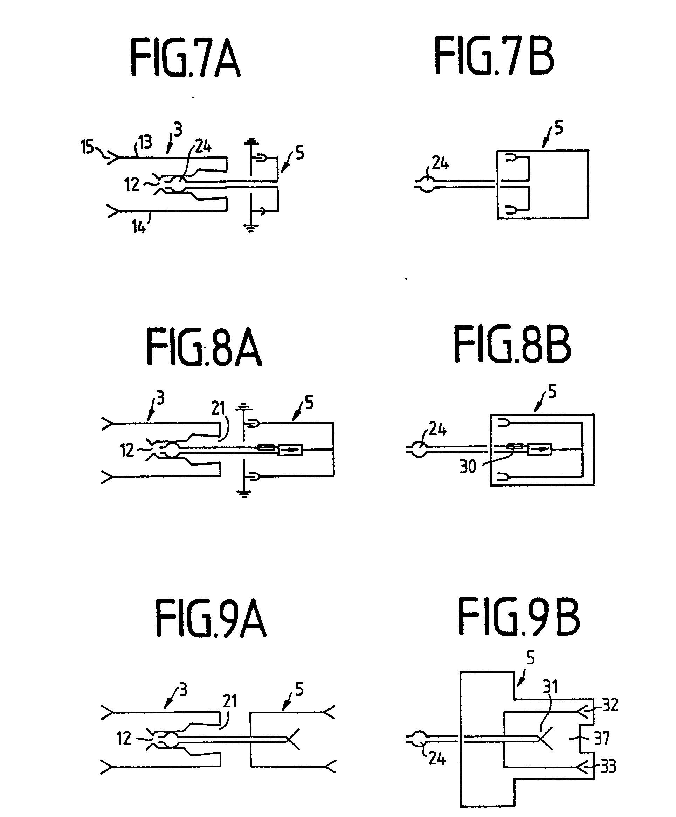

Die Figuren 7 bis 12 zeigen schematisch verschiedene Ausführungsformen von Schaltsteckern 5, die von der Manipulierseite 23 her in die einzelnen Anschlußmodule 3 einsteckbar sind. Die Fig. 7 B zeigt das Schaltungsprinzip des Schaltsteckers 5 als Erdstecker mit den beiden Schaltzungen 24. Diese greifen gemäß Fig. 7 A von der Manipulierseite eines Anschlußmoduls 3 in dessen Trennstelle 12 ein, welche somit mittels der Schaltzungen 24 zur Erdung der einzelnen Kontaktelemente 13, 14 aufgetrennt wird.

Die Fig. 8 B zeigt einen Schaltstecker 5 als Schutzstecker gegen überspannung, Überstrom und Überhitzung, welcher mit entsprechenden elektronischen Bauelementen 30 bestückt ist. Die Schaltzungen 24 greifen gemäß Fig. 8 A von der rückseitigen Einsecköffnung 21 her in die Trennstelle 12 ein, um diese entsprechend Fig. 7 A aufzutrennen.

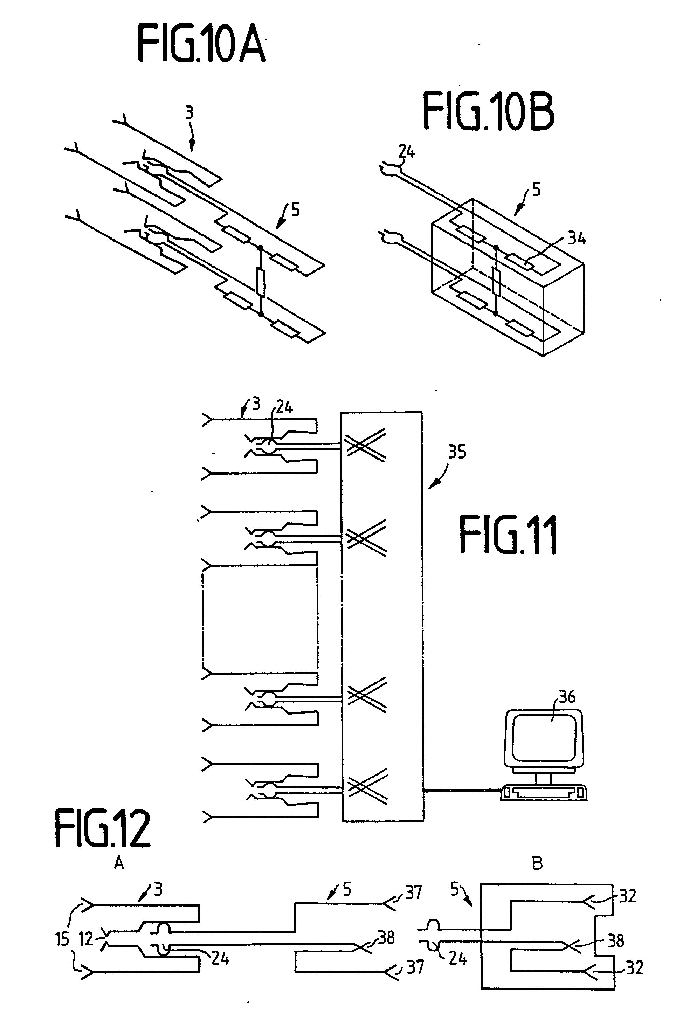

Die Fig. 9 B zeigt einen Schaltstecker 5 mit einer eigenen, mit zugeordneter Einsecköffnung 37 für weitere Schaltstecker versehenen Trennstelle 31 sowie Schneid- / Klemm-Anschlüssen 32 für den Anschluß der Rangierdrähte 28. Auch dieser Schaltstecker 5 greift mit seinen Schaltzungen 24 gemäß Fig. 9 A von der Manipulierseite 23 her durch die Einsecköffnung 21 in die Trennstelle 12 des jeweiligen Anschlußmoduls 3 ein, um diesen analog zu Fig. 7 A aufzutrennen.

Die Fig. 10 B zeigt einen Schaltstecker 5 mit elektronischen Dämpfungsgliedern 34. Dieser Schaltstecker 5 weist zwei Paare von Schaltzungen 24 auf, welche gemäß Fig. 10 A von der Manipulierseite 23 durch die Einsecköffnung 21 hindurch in die Trennstellen 12 zweier nebeneinander angeordneter Anschlußmodule 3 eingreifen, um diese in entsprechender Weise, wie es in Fig. 7 A dargestellt ist, aufzutrennen. Dadurch werden den Dämpfungsgliedern 34 entsprechende Dämpfungswerte in bestehende Übertragungswege eingekoppelt.

Die Fig. 11 zeigt ein elektronisches Schalt- und Koppelfeld 35 mit angeschlossenem administrativen System 36, wobei das Feld 35 mit mehreren Schaltzungen 24 versehen ist, die in eine entsprechende Anzahl von in gleichen Abständen voneinander angeordneten Anschlußmodulen 3 von der Manipulierseite 23 her eingreifen, um die jeweiligen Trennstellen 12 aufzutrennen.

Die Fig. 12 zeigt einen Schaltstecker 5, dessen Funktion ähnlich dem unter Fig. 9 beschriebenen Schaltstecker 5 ist. Dieser gestattet das getrennte Rangieren und Prüfen des Teilnehmer- und Vermittlungskabels 7 bzw. 9 mittels Schneid-/Klemm-Verbindungen 32 bzw. einer Trellstelle 38.

Bei allen Ausführungsformen von Schaltsteckern 5 bleibt aufgrund der besonderen Ausbildung der Schaltzungen 24 die Möglichkeit offen, daß auch nach dem Einstecken der Schaltzungen 24 in die Trennstellen 12 durch die rückseitige Einsecköffnung 21 hindurch jedes Anschlußmodel 3 von der Anschalteseite 18 her mit einem weiteren Schaltstecker 6 zum Messen und Prüfen versehen werden kann.

Jedes einzelne oder in einer Reihe 2 zusammengefaßte Anschlußmodul 3 wird auf seinem auf der Anschaltseite 18 vorgesehenen Anschaltfeld fest mit dem zugeordneten Teilnehmerkabel 7 und dem zugeordneten Vermittlungskabel 9 verdrahtet, wozu die Schneid- / Klemm-Verbindungen 15 der Kontaktelemente 13, 14 dienen. Somit ist die Erstinstallation der Verteilereinrichtung einerseits einfach aufgebaut, da diese nur ein einziges Anschlußmodul 3 benötigt und andererseits montagemäßig einfach beschaltbar ist. Sofern zu einem späteren Zeitpunkt ein Teilnehmerkabel 7 einem anderen Vermittlungskabel 9 zugeordnet werden soll, muß lediglich ein Schaltstecker 5 in der Ausführungsform gemäß der Fig. 9 oder 12 von der Manipulierseite 23 her in das jeweilge Anschlußmodul 3 eingesteckt werden. Über die Schneid-/Klemm-Verbindungen 32 können dann die notwendigen Rangierdrähte 28 angeschlossen werden, um das Teilnehmerkabel 7 mit dem Vermittlungskabel 9 eines anderen Anschlußmoduls 3 zu verbinden.

**Patentansprüche**

1. Verteilereinrichtung, insbesondere für den Hauptverteiler von Fernsprechanlagen, aus einen Kunststoffkörper umfassenden Anschlußmodulen mit auf der vorderen Anschlußseite angeordneten Kontaktelementen zum Anschluß von Kabeln, mit einer im Inneren des Kunststoffkörpers zwischen den Kontaktelementen angeordneten, die Leitungswege durchschaltenden Trennstelle und mit auf der vorderen Anschlußseite und der rückwärtigen Manipulierseite des Kunststoffkörpers ausgebildeten Einsecköffnungen zum Einstecken von Steckern in die Trennstellen, dadurch gekennzeichnet, daß der in die Einstecköffnung (21) auf der rückwärtigen Manipulierseite (23) eingesteckte Stecker (5) zum Auftrennen der Trennstelle (12) mit Schaltzungen (24) versehen ist, in die ein von der vorderen Anschlußseite (18) her in die vordere Einstecköffnung (19) des Anschlußmoduls (3) eingeführter weiterer Stecker (6) einsteckbar ist.

2. Verteilereinrichtung nach Anspruch 1, dadurch gekennzeichnet, daß mehrere Kunststoffkörper (11) nebeneinander angeordnet und zu einer Anschlußmodulleiste (2) zusammengefaßt sind.

3. Verteilereinrichtung nach Anspruch 2, dadurch gekennzeichnet, daß die Anschlußmodulleiste (2) auf der Ober- und Unterseite Führungen (8 bzw. 10) für die anzuschließenden Kabel (7 bzw. 9) aufweist.

4. Verteilereinrichtung nach einem der Ansprüche 1 bis 3, dadurch gekennzeichnet, daß die in die Einstecköffnung (21) der Manipulierseite (23) jedes Anschlußmoduls (3) einsteckbaren Schaltstecker (5) als Erdstecker ausgebildet sind (Fig. 7 A, B).

5. Verteilereinrichtung nach einem der Ansprüche 1 und 3, dadurch gekennzeichnet, daß die in die Einstecköffnung (21) der Manipulierseite (23) jedes Anschlußmoduls (3) einsteckbaren Schaltstecker (5) als Schutzstecker gegen Überspannungen, Überstrom und Überhitzung ausgebildet und mit entsprechenden elektronischen Bauelementen (30) versehen sind (Fig. 8 A, B).

6. Verteilereinrichtung nach einem der Ansprüche 1 bis 3, dadurch gekennzeichnet, daß die in die Einstecköffnungen (21) der Manipulierseite (23) eines jeden Anschlußmoduls (3) einsteckbaren Schaltstecker (5) mit Trennstellen (31) und Rangierdrahtanschlüssen (32, 33) versehen sind (Fig. 9 A, B).

7. Verteilerleiste nach einem der Ansprüche 1 bis 3, dadurch gekennzeichnet, daß die in die Einstecköffnungen (21) der Manipulierseite (23) zweier nebeneinander angeordneter Anschlußmodule (3) einsteckbaren Schaltstecker (5) mit Dämpfungsgliedern (34) und mit zwei Paaren von Schaltzungen (24) versehen sind (Fig. 10 A, B).

8. Verteilereinrichtung nach einem der Ansprüche 1 bis 3, dadurch gekennzeichnet, daß die in die Einstecköffnungen (21) der Manipulierseite (23) mehrerer paralleler Anschlußmodule (3) einsteckbaren Schaltstecker (5) zum Anschalten von elektronischen Schalt- und Koppelfeldern (35) und administrativen Systemen (36) ausgebildet und mit mehreren parallel angeordneten Schaltzungen (24) versehen sind (Fig. 11).

9. Verteilereinrichtung nach einem der Ansprüche 1 bis 3, dadurch gekennzeichnet, daß die in die Einstecköffnung (21) der Manipulierseite (23) jedes Anschlußmoduls (3) einsteckbaren Schaltstecker (5) mit Schneid-Klemm-Verbindungen (32) und Trennstellen (38) zum getrennten Rangieren bzw. Prüfen der Teilnehmer- und Vermittlungskabel (7 bzw. 9) versehen sind (Fig. 12 A, B).

## Revendications

1. Dispositif de répartition, en particulier pour le répartiteur principal d'installations de télécommunication, comportant des modules de raccord avec un corps en matière plastique et des éléments de contact disposés au côté de connexion avant pour le raccordement de lignes, avec un point de coupure commutant les voies conductrices et avec des ouvertures de prise agencées au côté de connexion avant et au côté de manipulation arrière du corps en matière plastique pour introduire des connecteurs dans le point de coupure, caractérisé en ce que le connecteur (5) introduit dans l'ouverture de prise (21) au côté de manipulation (23) est pourvu de lames de commutation (24) pour séparer le point de coupure (12) dans lequel un connecteur (6) additionnel introduit dans l'ouverture de prise (19) avant peut être introduit à partir du côté de connexion (18) avant.

2. Dispositif de répartition selon la revendication 1, caractérisé en ce que plusieurs corps en matière plastique (11) sont disposés l'un à côté de l'autre, et sont combinés à une réglette (2) d'un module de raccord.

3. Dispositif de répartition selon la revendication 2, caractérisé en ce que la réglette (2) d'un module de raccord comporte aux faces supérieures et inférieures des guidages (8 ou 10) pour les lignes (7 ou 9) à raccorder.

4. Dispositif de répartition selon une des revendications 1 à 3, caractérisé en ce que les connecteurs de commande (5) introduisables dans l'ouverture de prise (21) du côté de manipulation (23) de chaque module de raccord (3) sont agencés sous la forme de connecteurs à la terre (Fig. 7 A, B).

5. Dispositif de répartition selon une des revendications 1 à 3, caractérisé en ce que les connecteurs de commande (5) introduisables dans l'ouverture de prise (21) du côté de manipulation (23) de chaque module de raccord (3) sont agencés sous la forme de connecteurs de protection contre surtension, surcourant et surchauffage, et sont pourvus de composants électroniques (30) correspondants (Fig. 8 A, B).

6. Dispositif de répartition selon une des revendications 1 à 3, caractérisé en ce que les connecteurs de commande (5) introduisables dans l'ouverture de prise (21) du côté de manipulation (23) de chaque module de raccord (3) sont pourvus de points de coupure (31) et de raccorde pour jarretières de connexion (32, 33) (Fig. 9 A, B).

7. Dispositif de répartition selon une des revendications 1 à 3, caractérisé en ce que les connecteurs de commande (5) introduisables dans les ouvertures de prise (21) du côté de manipulation (23) de deux modules de raccord (3) disposés l'un à côté de l'autre sont pourvus d'éléments attenuateurs (34) et de deux paires de lames de commutation (24) (Fig. 10 A, B).

8. Dispositif de répartition selon une des revendications 1 à 3, caractérisé en ce que les connecteurs de commande (5) introduisables dans les ouvertures de prise (21) du côté de manipulation (23) de plusieurs modules de raccord (3) parallèles sont réalisés pour le raccordement de panneaux de distribution et de couplage (36) électroniques et sont pourvus de plusieurs lames de commutation (24) parallèles (Fig. 11).

9. Dispositif de répartition selon une des revendications 1 à 3, caractérisé en ce que les connecteurs de commande (5) introduisables dans les ouvertures de prise (21) du côté de manipulation (23) de chaque module de raccord (3) sont pourvus de connexions de déplacement d'isolant (32) et de points de coupure (38) pour raccorder ou tester séparément les lignes aux abonnés (7) ou les lignes au bureau téléphonique (9) (Fig. 12 A, B).

## Claims

1. A divider device, in particular for the main divider of telecommunication installations, comprising connection modules including a plastic body provided with contact elements arranged on the front connection side for connecting cables, a disconnecting point arranged inside the plastic body between the contact elements and switching the conduction paths through, and plug-in openings arranged on the front connection side and on the rear handling side of the plastic body for inserting connectors into the disconnecting point, characterized by that the connector (5) inserted into the plug-in opening (21) on the rear handling side (23) is provided with switching tongues (24) for disconnecting the disconnecting point (12), into said switching tongues another connector (6) being insertable from the front connection side (18) into the front plug-in opening (19) of the connection module (3).

2. A divider device according to claim 1, characterized by that several plastic bodies (11) are arranged side by side, and are combined to a connection module bank (2).

3. A divider device according to claim 2, characterized by that the connection module bank (2) comprises on the top and on the bottom side guides (8 or 10, resp.) for the cables (7 or 9, resp.) to be connected.

4. A divider device according to one of claims 1 to 3, characterized by that the switching connectors (5) to be inserted into the plug-in opening (21) of the handling side (23) of each connection module (3) are adapted as earthing connectors (Figs. 7 A, B).

5. A divider device according to one of claims 1 to 3, characterized by that the switching connectors (5) to be inserted into the plug-in opening (21) of the handling side (23) of each connection module (3) are adapted as protective connectors against overvoltages, overcurrent and overheating and are provided with suitable electronic components (30) (Figs. 8 A, B).

6. A divider device according to one of claims 1 to 3, characterized by that the switching connectors (5) to be inserted into the plug-in opening (21) of the handling side (23) of each connection module (3) are provided with disconnecting points (31) and jumper wire connections (32, 33) (Figs. 9 A, B).

7. A divider device according to one of claims 1 to 3, characterized by that the switching connectors (5) to be inserted into the plug-in openings (21) of the handling side (23) of two connection modules (3) arranged side by side are provided with damping elements (34) and with two pairs of switching tongues (24) (Figs. 10 A, B).

8. A divider device according to one of claims 1 to 3, characterized by that the switching connectors (5) to be inserted into the plug-in openings (21) of the handling side (23) of several connection modules (3) are adapted for connecting electronic switching and coupling fields (35) are administrative systems (36), and are provided with several parallel switching tongues (24) (Fig. 11).

9. A divider device according to one of claims 1 to 3, characterized by that the switching connectors (5) to be inserted into the plug-in openings (21) of the handling side (23) of each connection module (3) are provided with cutting/clamping connections (32) and disconnecting points (38) for separately connecting or testing the subscriber and exchange cables (7 or 9, resp.) (Figs. 12 A, B).

EP  0 243 296  B1

# FIG.1

FIG.2

EP 0 243 296 B1

2  8  7  3  11  5  4

15

13  16

18

19

15  14  24  31  37

32

17  33

9  7

6

20  12  22  21

10  23

9  1

FIG.3

EP 0 243 296 B1

## FIG.4

## FIG.5

# FIG.6

EP  0 243 296  B1

FIG.7A

FIG.7B

FIG.8A

FIG.8B

FIG.9A

FIG.9B

6

EP  0 243 296  B1

# FIG.10A

# FIG.10B

# FIG.11

# FIG.12

7